Europäisches Patentamt

European Patent Office

Office européen des brevets

(19)

(11) Numéro de publication : **0 345 139 B1**

## (12) FASCICULE DE BREVET EUROPEEN

(45) Date de publication du fascicule du brevet :
16.09.92 Bulletin 92/38

(51) Int. Cl.$^5$ : **F16H 55/54,** F16H 9/10

(21) Numéro de dépôt : **89401462.0**

(22) Date de dépôt : **29.05.89**

(54) **Poulie à diamètre variable simple ou double et variateurs de vitesse incluant une telle poulie double.**

(30) Priorité : **31.05.88 FR 8807230**

(43) Date de publication de la demande :
**06.12.89 Bulletin 89/49**

(45) Mention de la délivrance du brevet :
**16.09.92 Bulletin 92/38**

(84) Etats contractants désignés :
**AT BE CH DE ES GB IT LI NL SE**

(56) Documents cités :
**FR-A- 340 759
FR-A- 947 416
FR-A- 1 490 170
FR-A- 2 123 920
FR-A- 2 166 678**

(73) Titulaire : **ELECTRICITE DE FRANCE Service National
2, rue Louis Murat
F-75008 Paris (FR)**

(72) Inventeur : **Patin, Pierre
15 rue Buffon
F-75015 Paris (FR)**
Inventeur : **Patin, Pierre-Armand
36 Ter Impasse de la Tour d'Auvergne
F-75009 Paris (FR)**

(74) Mandataire : **Mongrédien, André et al
c/o BREVATOME 25, rue de Ponthieu
F-75008 Paris (FR)**

EP 0 345 139 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

# Description

La présente invention se rapporte à une poulie de diamètre variable qui peut être simple ou double, ainsi qu'à des variateurs de vitesse incluant une telle poulie double.

Les variateurs continus de vitesse nécessitent l'emploi de poulies dites à diamètre variable. Plusieurs types existent. Le plus simple utilise deux poulies d'axes parallèles à flasques coniques et réunies par une courroie trapézoïdale : le déplacement de la courroie sur les poulies régit le rapport de vitesse. Ces poulies présentent toutefois plusieurs inconvénients dont le plus important est dû à l'épaisseur des courroies, qui entraîne des frottements et des pertes par hystérésis de déformation ainsi que des glissements radiaux et longitudinaux ; un autre inconvénient est l'imprécision du rapport de variation.

Il existe également des poulies composées d'éléments d'appui d'une courroie plate, d'une chaîne ou d'un câble, répartis sur une circonférence et dont l'éloignement de l'axe de rotation de la poulie peut être réglé. On peut citer à ce propos les brevets français FR-A- 1 490 170 et FR-A- 2 123 920. Dans le premier d'entre eux, les éléments d'appui sont des plaques radiales sur lesquelles la courroie s'appuie et qui peuvent présenter une surface striée pour améliorer l'adhérence. Dans le second, on utilise des tiges transversales de petit diamètre parallèles à l'axe de rotation qui coulissent dans des rainures rayonnantes.

Les courroies ne s'appuient cependant que sur une petite surface, par exemple une génératrice de chacune des tiges, ce qui fait que des glissements tangentiels sont inévitables en pratique. C'est pourquoi le premier brevet prévoit l'emploi de pinces enserrant la courroie, mais qui compliquent sensiblement la poulie.

Un autre inconvénient provenant également de l'étroitesse des éléments d'appui réside dans l'effet polygonal, c'est-à-dire que la courroie est droite entre les éléments d'appui et à petit rayon de courbure sur ces éléments et que la longueur de courroie portant sur ces éléments d'appui varie légèrement, d'où des irrégularités de la contrainte appliquée à la courroie.

Enfin, ces poulies ne sont pas adaptées aux grandes vitesses de rotation car les éléments d'appui sont alors le siège d'efforts centrifuges importants qui remettent en question leur réglage.

Ces inconvénients sont évités avec la poulie à diamètre variable selon l'invention, dont la caractéristique majeure réside dans un mécanisme de contrepoids équilibrant systématiquement les efforts centrifuges qui s'exercent sur les éléments d'appui. Il est alors possible de choisir des éléments d'appui en forme de segment circonférentiels relativement longs, qui appuient la courroie ou l'organe équivalent sur une surface importante sans que la masse des éléments d'appui conduise à un risque de déréglage de la poulie.

On évite ainsi tout glissement tangentiel de la courroie sur la poulie. L'effet polygonal peut également être à peu près vaincu, notamment dans la réalisation préférée où les segments ont une surface d'appui convexe en arc de cercle, car le rayon de courbure de la courroie n'est alors jamais inférieur à celui de cette surface, et la courroie est soumise à des variations de contraintes bien moins sensibles.

Les contrepoids sont avantageusement des éléments d'appui d'une seconde poulie associée à la première et d'axe de rotation commun : on obtient alors une poulie double formée de deux poulies parallèles dont les diamètres varient de façon antagoniste, une poulie se dilatant quand l'autre se contracte ; il est encore plus avantageux que les éléments d'appui des deux poulies soient identiques et que chaque élément d'appui d'une poulie soit associé à un élément de l'autre poulie, les deux éléments étant aux extrémités d'une bielle symétrique articulée en son centre et de longueur telle que les éléments font un angle de 90° entre eux par rapport à l'axe de rotation des poulies, car à alors les forces centrifuges sont toujours équilibrées et tout état de la poulie double est un état d'équilibre stable.

Une telle poulie double peut avantageusement être intégrée à un variateur continu de vitesse, comme connu de FR-A-340 759 : une des deux poulies variables est reliée par une courroie à une poulie primaire de diamètre fixe, l'autre poulie variable à une poulie secondaire, également de diamètre fixe,par une autre courroie. Le rapport de variation de vitesse est soit commandé, soit variable automatiquement en fonction du couple exercé sur la poulie secondaire.

L'invention concerne donc plus précisément tout d'abord une poulie à diamètre variable tournant autour d'un axe et pourvue d'éléments déplaçables pour se rapprocher ou s'écarter de l'axe sous l'action d'un mécanisme de réglage commun, les éléments étant tous à une distance commune de l'axe, ainsi que d'une structure de guidage des éléments déplaçables, le mécanisme de réglage commun étant un disque parallèle à la poulie, rotatif par rapport à la poulie et muni de bielles dont chacune est articulée à une extrémité sur un élément déplaçable et pivote sur un pivot situé sur le disque, les pivots étant situés sur un cercle centré sur l'axe. Tous cela existe déjà dans FR-A-2 166 678, mais l'invention s'en distingue en ce que chaque bielle porte un contrepoids à son autre extrémité et en ce que le pivot est situé en un point intermédiaire.

Un autre aspect de l'invention est constitué par une poulie double composée d'une telle poulie à diamètre variable où les contrepoids sont des éléments déplaçables d'une seconde poulie, les deux poulies étant dans des plans parallèles et tournant autour d'un axe commun, les éléments déplaçables de la seconde poulie étant déplaçables radialement et à une distance commune de l'axe, guidés par un second mécanisme de guidage et articulés sur leur bielle, les deux éléments déplaçables associés par une même bielle faisant entre eux un angle de 90° par rapport à l'axe, les deux mécanismes de guidage étant solidaires.

Les modes de réalisation possibles de l'invention apparaîtront mieux à l'aide de la description détaillée des figures suivantes annexées à titre illustratif et nullement limitatif :

– la figure 1 représente une poulie à diamètre variable selon l'invention,

– les figures 2a et 2b représentent schématiquement, en vue latérale et en vue frontale respectivement, une poulie double selon l'invention formée de deux poulies à diamètre variable conjuguées ;

– la figure 3 est un schéma tiré de la figure 2a expliquant comment les forces centrifuges appliquées sur les deux poulies s'équilibrent ;

– la figure 4 représente une autre poulie double ;

– la figure 5 représente un variateur de vitesse automatique utilisant la poulie double ;

– la figure 6 représente un variateur de vitesse commandé ;

– la figure 7 représente un autre variateur de vitesse commandé, et

– la figure 8 représente une application possible de tels variateurs de vitesse.

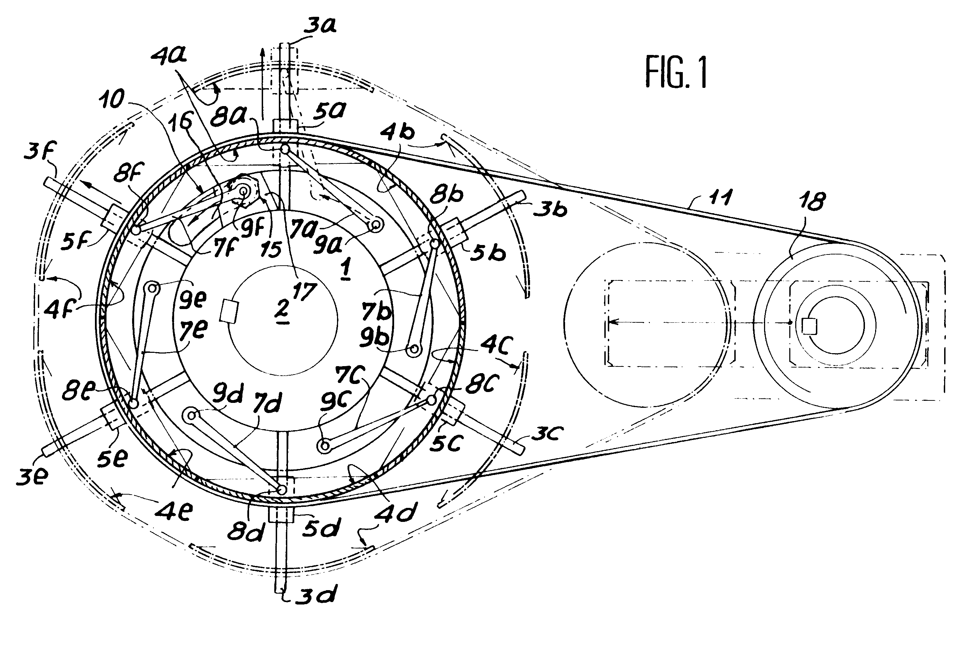

Sur la figure 1, on voit que la poulie à diamètre variable comprend tout d'abord un moyeu 1 tournant autour d'un axe 2 claveté. Plusieurs bras radiaux régulièrement répartis angulairement, ici au nombre de six et référencés par 3a et 3f, partent du moyeu 1. Des segments circonférentiels 4a à 4f coulissent sur chacun de ces bras 3a à 3f par l'intermédiaire d'une douille 5a à 5f qui leur est fixée, au centre de la longueur de chacun des segments et un peu latéralement. Les douilles 5a à 5f sont articulées par un téton 8a à 8f à une extrémité d'une bielle 7a à 7f dont le centre est articulé sur un pivot 9a à 9f, les pivots 9a à 9f étant portés par un disque commun 10 qui peut tourner autour du moyeu 1 et aussi lui être assujetti, par exemple par un boulon de serrage 15 qui traverse transversalement le disque 10 et une rainure en secteur circulaire 16 établie sur une patte 17 du moyeu 1. Les pivots 9a à 9f sont situés sur un cercle centré sur l'axe 2.

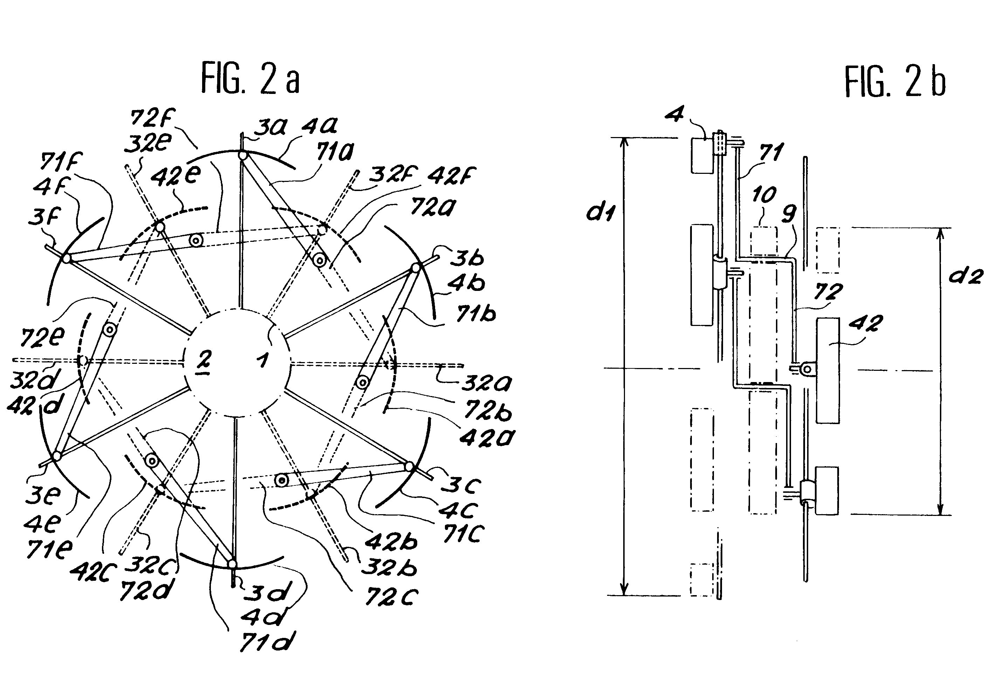

Les bielles 7a à 7f se prolongent au-delà de leur centre 9a à 9f par une partie de l'autre côté du disque 10, qui porte un contrepoids et sera décrite figures 2a et 2b.

On voit tout de suite que la rotation du disque 10 par rapport aux bras 3a à 3f entraîne la rotation des biellettes 7a à 7f et le déplacement radial des segments 4a à 4f. Comme la structure est parfaitement répétitive par rotation, les segments 4a à 4f sont tous à la même distance de l'axe 2.

On est donc en présence d'une poulie à diamètre variable, dont le diamètre minimal est défini quand les segments 4a à 4f sont tous jointifs, et dont le diamètre maximal est obtenu quand les bielles 7a à 7f sont parallèles aux bras 3a à 3f. La première position est en trait plein sur la figure 1 et la seconde position en traits mixtes. Toutes les positions intermédiaires sont possibles.

Les segments 4a à 4f sont circonférentiels, de longueur relativement importante et recourbés avec une surface externe convexe, de préférence en forme d'arc de cercle, qui leur permet d'être en contact sur toute leur longueur avec une courroie 11 de transmission d'effort ou de mouvement entre la poulie à diamètre variable et une poulie à diamètre fixe 18. Le rayon de courbure des segments 4 correspond de préférence au rayon minimal de la poulie à diamètre variable : la surface obtenue quand les segments 4a sont jointifs est alors cylindrique de révolution. Mais un très bon contact entre les segments 4 et la courroie 11 est également réalisé pour les autres diamètres de la poulie à diamètre variable, ce qui garantit une bonne adhérence de la courroie 11. On constate par ailleurs que le rayon de courbure auquel est soumise la courroie 11 reste au moins égal à celui des segments 4, ce qui fait que l'effet polygonal est très réduit. Le calcul montre que cet effet polygonal, qui se ramène à une variation relative de longueur entre les brins de la courroie, est de l'ordre de ±2‰ pour une poulie comprenant six segments 4 et seulement ±0,1‰ pour une poulie qui comprendrait seize segments. Les variations cycliques de contraintes dans la courroie 11 sont donc négligeables.

On va maintenant passer à la description des figures 2a et 2b.

Les bielles 7a à 7f comprennent chacune deux parties reliées entre elles par les pivots 9a à 9f : une première partie 71a à 71f reliée à un segment 4a à 4f et une seconde partie 72a à 72f, de l'autre côté du disque 10 qui prolonge la première partie 71a à 71f et à l'extrémité de laquelle un second segment 42a à 42f est articulé, les segments 4a et 42a se déplaçant de préférence sur des rayons perpendiculaires entre eux par rapport à l'axe 2.

Dans la réalisation la plus générale de l'invention, les secondes parties 72a à 72f portent simplement des contrepoids qui permettent d'équilibrer les moments de rotation dus aux forces centrifuges qui s'exercent sur les pivots 9a à 9f. Il est toutefois intéressant que ces contrepoids soient les seconds segments 42a à 42f, car on dispose alors d'une poulie double formée de deux poulies d'axe 2 commun, liées en rotation par le moyeu 1 et appartenant à des plans parallèles de part et d'autre du disque 10.

La seconde poulie peut être de construction tout à fait semblable à la première et comprendre en particulier des seconds bras radiaux 32a à 32f le long de chacun desquels un second segment 42a à 42f coulisse par une douille.

Les deux poulies sont donc solidaires et réglées en même temps par la rotation du disque 10. Quand le diamètre d1 de l'une augmente, celui d2 de l'autre diminue en concomitance.

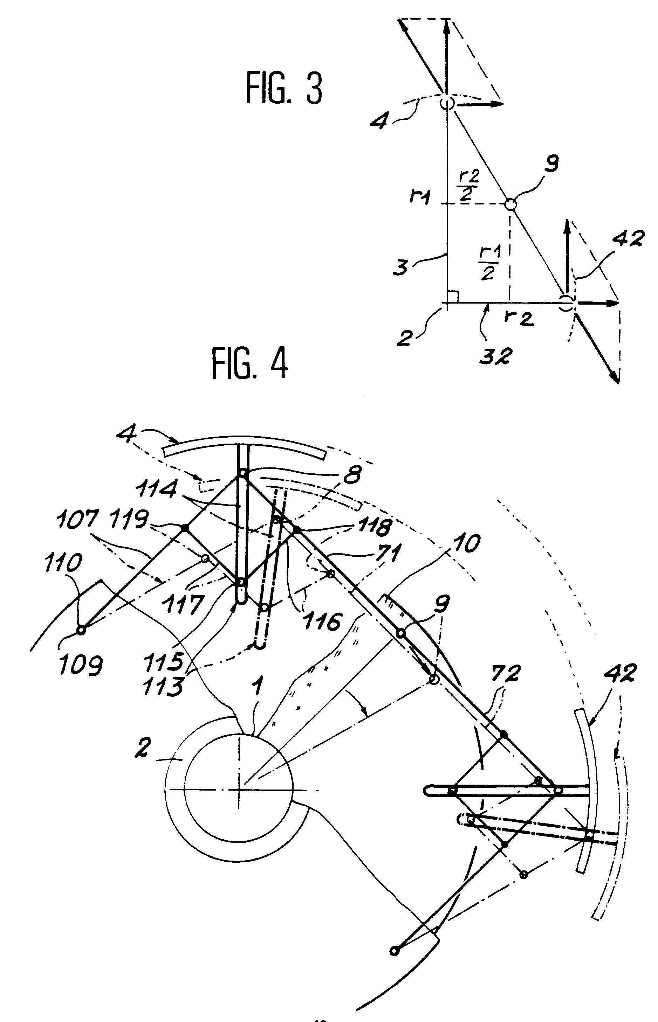

Dans la meilleure conception, les parties 71 et 72 des bielles 7 sont symétriques et leur longueur est égale au rayon du cercle des pivots 9.
De ce fait , les segments 4 et 42 qu'elles associent l'un à l'autre coulissent sur des bras 3 et 32 se rejoignant sur l'axe à 90° (figure 3). Cette configuration permet en effet d'annuler à tout moment le couple d'inertie de rotation qui s'exerce sur le pivot 9 : si le segment 4 est à une distance $r_1$ de l'axe 2 et si le segment associé 42 est à une distance $r_2$ de l'axe 2, m étant la masse commune des segments et $\omega$ la vitesse de rotation, les forces centrifuges qui s'exercent respectivement sur ces segments sont $m\omega^2 r_1$ et $m\omega^2 r_2$. Les bras de levier de ces forces centrifuges sur le pivot 9 sont égaux à sa distance aux bras 3 et 32, c'est-à-dire $r_2/2$ et $r_1/2$ respectivement. Les moments, égaux tous deux à $m\omega^2 (r_1 r_2/2)$ et opposés, s'annulent. Le même raisonnement s'applique pour les parties symétriques 71 et 72.

Toutes les configurations de variation de vitesse de cette poulie double correspondent donc à des états d'équilibre stable. De telles poulies doubles sont donc très avantageuses, spécialement pour des variateurs de vitesse automatiques pour lesquels le disque 10 et le moyeu 1 tournent librement l'un par rapport à l'autre, sans qu'existe un système de blocage tel que le boulon 15.

D'autres réalisations de la poulie simple ou double et de ses mécanismes de réglage et de guidage des éléments d'appui restent parfaitement possibles, tel celui décrit à l'aide de la figure 4. Les segments 4 (ou 42 le cas échéant) ne coulissent plus le long de bras radiaux mais sont articulés à une extrémité d'une deuxième bielle 107 appelée bielle de poulie, dont l'autre extrémité est articulée à un pivot 109 disposé sur un disque de poulie 110 solidaire du moyeu 1 et parallèle au disque 10. La bielle de poulie 107 et la première partie 71 de la première bielle 7 ont même longueur, sont articulées au segment 4 par un téton commun 8 et les pivots 109 des bielles de poulie 107 sont tous situés sur un cercle centré sur l'axe 2 et de même diamètre que le cercle sur lequel les pivots 9 sont disposés.

Les segments 4 sont pourvus d'un tronçon 113 dirigé vers l'axe 2 et entaillé d'une rainure radiale 114. Un tenon 115 y circule, et une troisième bielle 116 ainsi qu'une quatrième bielle 117 y sont articulées à une extrémité, tout en étant articulées à leur autre extrémité respectivement en des points intermédiaires 118 et 119 de la première bielle 7 et de la bielle de poulie 107. Les troisième et quatrième bielles 116 et 117 sont semblables et délimitent de préférence, avec les portions des première et deuxième bielles 7 et 107, du côté du segment 4, une surface en forme de losange dont le tronçon 113 occupe une diagonale.

Quand le disque 10 tourne par rapport au moyeu 1, cette disposition fait que le segment 4 se déplace radialement, mais aussi angulairement. Les troisième et quatrième bielles 116 et 117 maintiennent le tronçon 113 en position parfaitement radiale, et le segment 4 reste circonférentiel. Le système est symétrique par rapport au plan du disque 10.

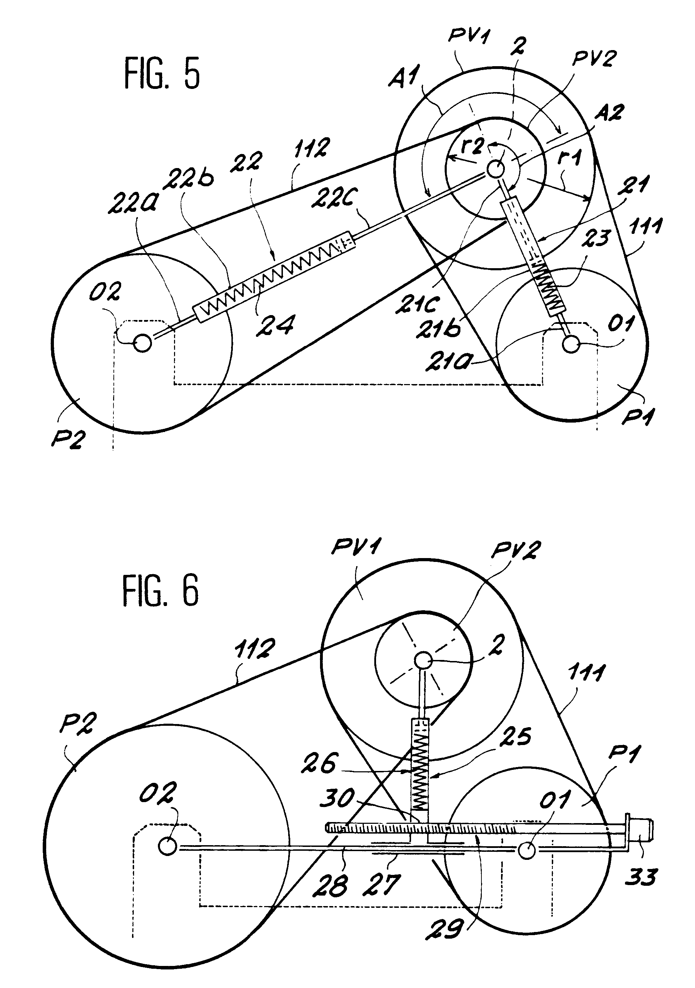

Un variateur de vitesse automatique à poulie double est représenté figure 5. Il se compose d'une poulie primaire $P_1$ et d'une poulie secondaire $P_2$ de diamètres fixes et de centres de rotation fixes $O_1$ et $O_2$. La poulie primaire $P_1$ est reliée à une première poulie $PV_1$ de la poulie double à l'aide d'une première courroie 111, alors que la poulie secondaire $P_2$ est reliée à l'autre poulie $PV_2$ de la poulie variable à l'aide d'une seconde courroie 112. La position de la poulie variable est réglée à l'aide de deux bras télescopiques 21 et 22, articulés à une extrémité sur l'axe 2 et à leur autre extrémité respectivement sur les centres de rotation $O_1$ et $O_2$ de la poulie primaire $P_1$ et de la poulie secondaire $P_2$. Les bras télescopiques 21 et 22 sont formés d'une partie pivotante 21a et 22a qui pivote autour de $O_1$ et $O_2$ et se termine par une enveloppe cylindrique 21b et 22b dans laquelle un ressort de compression 23 et 24 est logé. Ce ressort repousse l'extrémité d'une tige coulissante 21c et 22c dans l'enveloppe cylindrique 21b et 22b ; l'autre extrémité des tiges coulissantes 21c et 22c est articulée autour de l'axe 2. Comme on le constate, les bras télescopiques 21 et 22 sont entourés par leurs courroies respectives 111 et 112 que les ressorts 23 et 24 tendent. En fonctionnement, un état stable s'établit selon les efforts qui s'exercent dans le système : si on appelle $F_1$ et $F_2$ les forces des ressorts 23 et 24 respectivement, $A_1$ et $A_2$ les angles de contact des courroies 111 et 112 sur les poulies à diamètres variables $PV_1$ et $PV_2$, et $r_1$ et $r_2$ les rayons respectifs des poulies à diamètres variables $PV_1$ et $PV_2$, on peut démontrer que cet état stable correspond à approximativement $F_1/F_2 = A_2 r_1/A_1 r_2$. On peut en conclure que les rayons des poulies $PV_1$ et $PV_2$ dépendent en particulier de la force et de la raideur des ressorts 23 et 24.

Il est par ailleurs facile de s'apercevoir que le variateur de vitesse se règle automatiquement : si par exemple le couple qu'il faut appliquer à la poulie secondaire $P_2$ s'accroît, la seconde courroie 112 se tend davantage, ce qui exerce une force centripète dissymétrique sur les segments 42 de la poulie $PV_2$ dont le rayon $r_2$ diminue donc. Le rayon de la poulie $PV_1$ augmente corrélativement.

La modification de la forme de la poulie variable s'accompagne d'un déplacement de la position de l'axe 2, qui dans cet exemple se rapproche de la poulie primaire $P_1$ et s'éloigne de la poulie secondaire $P_2$.

La force $F_1$ du ressort 23 augmente et la force $F_2$

du ressort 24 diminue, ce qui est compatible avec l'équation rencontrée plus haut. Le système finit donc par atteindre une autre position d'équilibre stable.

Le dispositif représenté sur la figure 6 est quelque peu différent. On est ici en face d'un variateur de vitesse commandé, c'est-à-dire que le rapport des vitesses produit par la poulie à diamètre variable $PV_1$ et $PV_2$ est réglé par l'utilisateur. Le support de l'axe 2 est donc ici quelque peu différent.

Une glissière 28 s'étend entre les centres $O_1$ et $O_2$ de rotation de la poulie primaire $P_1$ et de la poulie secondaire $P_2$ ; elle porte une douille coulissante 27 sur laquelle s'élève un bras télescopique 25 de construction analogue à ceux de la figure 5 et qui comprend en particulier un ressort de compression 26.

L'axe 2 est à l'extrémité mobile du bras télescopique 25. Par ailleurs, le bras télescopique 25 est muni d'un taraudage 30 dans lequel s'engage une vis sans fin 29 parallèle à la glissière 28 et dont un servomoteur 33 assure la rotation. Le bras télescopique 25 assure la tension des deux courroies 111 et 112 à la fois.

Si on veut modifier le rapport de variation de vitesse, on met en marche le servomoteur 33 de façon à déplacer par translation le bras télescopique 25 et l'axe 2. Une des courroies, tendue davantage, réduit le diamètre de la poulie $PV_1$ ou $PV_2$ sur laquelle elle s'appuie tandis que le diamètre de l'autre augmente corrélativement.

La longueur du bras télescopique 25 s'ajuste jusqu'à ce que le système atteigne un état stable où les deux courroies sont tendues.

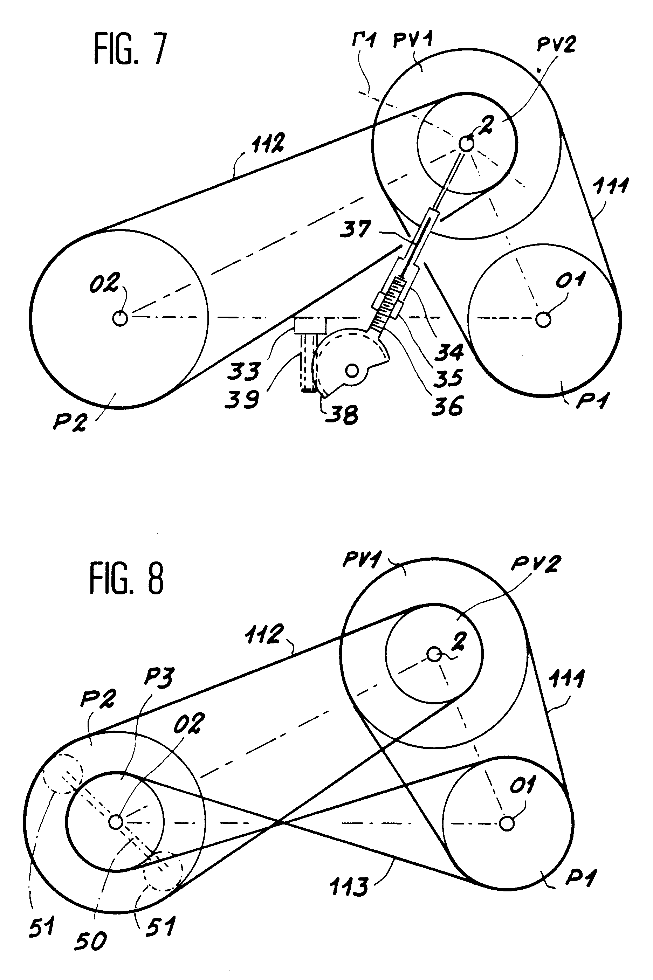

La figure 7 représente un autre variateur de vitesse commandé. On retrouve un servomoteur 33 qui entraîne une vis sans fin 39, mais celle-ci engrène ici avec une roue dentée 38 d'axe de rotation parallèle à celui des diverses poulies.

La roue dentée 38 porte un système télescopique composé d'une vis 36 radiale prolongée par une tige de guidage 37. Un écrou 35 coopère avec la vis 36 pour éloigner ou rapprocher un bras radial 34, dont l'extrémité porte l'axe 2, de la roue dentée 38. Le bras 34 coulisse sur la tige 37. Comme précédemment la rotation du servomoteur 33, de la vis sans fin 39 et de la roue dentée 38 provoque le déplacement de l'axe 2 et des poulies à diamètre variable $PV_1$ et $PV_2$ ainsi que la variation de leurs diamètres.

On remarque que le système télescopique ne comprend ici aucun ressort. En effet, le lieu des points que l'axe 2 peut occuper au cours d'un fonctionnement stable du système est sensiblement un cercle $\Gamma_1$ dont le centre dépend des longueurs des courroies 111 et 112 et des diamètres des poulies primaire $P_1$ et secondaire $P_2$. L'axe de la roue dentée 38 est au centre du cercle $\Gamma_1$. L'écrou 35 n'est utilisé que pour régler la tension des courroies 111 et 112.

On passe finalement au commentaire de la figure 8 qui montre un variateur de vitesse qui, en combinaison avec un train épicycloïdal, permet d'obtenir un variateur à dérivation de puissance passant par la vitesse zéro.

On ajoute à la poulie primaire $P_1$, à la poulie secondaire $P_2$ et à la poulie double à diamètre variable $PV_1$ et $PV_2$ une poulie supplémentaire $P_3$ coaxiale à la poulie secondaire $P_2$, de plus petit diamètre et qui constitue un planétaire, ainsi que deux poulies satellites 51 en contact à la fois avec une surface interne de la poulie secondaire $P_2$ - qui constitue la couronne du train planétaire - et une surface externe de la poulie supplémentaire $P_3$. Les poulies satellites 51 tournent aux extrémités d'un porte-satellites 50 en rotation autour de l'axe $O_2$. Par ailleurs, la poulie supplémentaire $P_3$ est rendue solidaire de la poulie primaire $P_1$ par une troisième courroie 113, croisée, de telle sorte que les poulies secondaire $P_2$ et supplémentaire $P_3$ tournent dans des sens opposés.

Cette disposition permet, avec des diamètres appropriés des différentes poulies, d'obtenir un système où le porte-satellites 50 a une vitesse de rotation faible par rapport à celle des poulies et dans un sens ou dans l'autre suivant les diamètres des poulies $PV_1$ et $PV_2$. On peut en particulier régler le système sur un état déterminé pour lequel le porte-satellites 50 est immobile.

La poulie selon l'invention offre donc divers avantages : elle offre tout d'abord un fonctionnement satisfaisant, sans glissement de la courroie même aux grandes vitesses de rotation, et les poulies doubles peuvent être montées dans des variateurs, automatiques ou non, de conceptions variées. On peut lui adapter, au lieu d'une courroie plate, un organe équivalent tel qu'une courroie striée ou un câble. Enfin, de nombreux autres modes de réalisation sont possibles sans sortir du cadre de l'invention les ressorts des bras télescopiques des variateurs de vitesse peuvent ainsi être remplacés par des vérins électriques, mécaniques ou pneumatiques, et de même pour les servomécanismes de commande de variation.

## Revendications

1. Poulie à diamètre variable tournant autour d'un axe (2) et pourvue d'éléments déplaçables (4,5,13) pour se rapprocher ou s'écarter de l'axe sous l'action d'un mécanisme de réglage commun (10, 7), les éléments étant tous à une distance commune de l'axe, ainsi que d'une structure de guidage (3) des éléments déplaçables, le mécanisme de réglage commun étant un disque (10) parallèle à la poulie, rotatif par rapport à la poulie et muni de bielle (7) dont chacune est articulée à une extrémité sur un élément déplaçable (4,5,13) et pivote sur un pivot (9) situé sur le disque, les pivots étant situés sur un cercle centré sur l'axe, caractérisée en ce que chaque bielle (7) porte un contrepoids (42) à son autre extrémité et en ce que le pivot (9) est situé en un point intermédiaire.

2. Poulie selon la revendication 1, caractérisée en ce que les éléments déplaçables sont des segments ayant une surface externe, sur laquelle un organe de transmission d'effort tel qu'une courroie (11) est destinée à s'appuyer, convexe et recourbée en arc de cercle.

3. Poulie seton la revendication 2 caractérisée en ce que les segments sont déplaçables jusqu'à une position rétractée où ils sont jointifs et où leurs surfaces externes constituent une surface cylindrique de révolution.

4. Poulie selon l'une quelconque des revendications 1 à 3, caractérisée en ce que la structure de guidage est composée de bras radiaux (5) sur lesquels les éléments déplaçables coulissent.

5. Poulie selon l'une quelconque des revendications 1 à 3, caractérisée en ce que la structure de guidage est composée d'un disque de poulie (110) portant des pivots de poulie (109) sur lesquels sont articulées des bielles de poulie (107), les bielles de poulie étant par ailleurs chacune articulée à un élément déplaçable (4), les pivots de poulie étant tous situés sur un cercle centré sur l'axe et de même diamètre que le cercle sur lequel les pivots du mécanisme de réglage sont situés, les éléments déplaçables portant par ailleurs un tronçon (113) dirigé vers l'axe et portant une rainure radiale (114), un tenon (115) d'une troisième (116) et d'une quatrième (117) bielles coulissant dans la rainure et les troisième et quatrième bielles étant articulées respectivement sur la bielle du mécanisme de réglage et la bielle de la structure de guidage.

6. Poulie selon la revendication 5, caractérisée en ce que les troisième et quatrième bielles ont un tenon commun coulissant dans la rainure et autour duquel l'une au moins d'entre elles est articulée, et en ce que les quatre bielles entourent une surface en forme de losange.

7. Poulie double selon l'une quelconque des revendications 1 à 6, caractérisée en ce que les contrepoids sont des éléments déplaçables (42) d'une seconde poulie, les deux poulies étant dans des plans parallèles et tournant autour d'un axe commun (2), les éléments déplaçables de la seconde poulie étant déplaçables radialement et à une distance commune de l'axe, guidés par un second mécanisme de guidage et articulés sur leur bielle, les deux éléments déplaçables associés par une même bielle faisant un angle de 90° avec l'axe (2), les deux mécanismes de guidage étant solidaires.

8. Poulie double selon la revendication 7, caractérisée en ce que les bielles et les éléments déplaçables qui leur sont articulés ont une répartition de masses engendrant, lors des rotations des poulies des forces centrifuges d'inertie ayant un moment de rotation résultant de valeur nulle autour des pivots (9).

9. Poulie double selon la revendication 8, caractérisée en ce que les bielles sont symétriques et en ce que les éléments déplaçables associés ont la même masse.

10. Variateur de vitesse comprenant une poulie double, une poulie primaire ($P_1$) et une poulie secondaire ($P_2$), deux éléments de transmission d'effort tels que des courroies (111, 112) tendus entre la poulie primaire et une des poulies de la poulie double d'une part, entre l'autre poulie de la poulie double et la poulie secondaire d'autre part, ainsi qu'un support (21-24) de l'axe de la poulie double déplaçable en fonction des déplacements radiaux des segments des deux poulies ($PV_1$ et $PV_2$) de la poulie double, caractérisé par une poulie double selon l'une quelconque des revendications 7 à 9.

11. Variateur de vitesse selon la revendication 10, caractérisé en ce que le support comprend des ressorts (23, 24) pour assurer la tension des courroies.

12. Variateur de vitesse selon l'une quelconque des revendications 10 ou 11, caractérisé en ce que le support (34) est réglable pour ajuster la tension des courroies.

13. Variateur de vitesse selon la revendication 11, caractérisé en ce que le support est un bras télescopique comprenant deux parties entre lesquelles le ressort est installé.

14. Variateur de vitesse selon l'une quelconque des revendications 10 à 13, caractérisé en ce que le support est déplaçable par translation, sensiblement entre la poulie primaire et la poulie secondaire.

15. Variateur de vitesse selon l'une quelconque des revendications 10 à 13, caractérisé en ce que le support est déplaçable par rotation.

16. Variateur de vitesse selon l'une quelconque des revendications 10 à 12, caractérisé en ce que le support comprend deux bras télescopiques (21, 22) pivotant respectivement autour des axes des poulies primaire et secondaire.

17. Variateur de vitesse selon l'une quelconque des revendications 10 à 16, caractérisé en ce que les déplacements du support peuvent être commandés et bloqués.

18. Variateur de vitesse selon l'une quelconque des revendications 10 à 16, caractérisé en ce qu'il comprend une poulie supplémentaire (P₃), coaxiale à la poulie secondaire et reliée par un élément de transmission d'effort tel qu'une courroie (113) à la poulie primaire de telle sorte que la poulie secondaire et la poulie supplémentaire tournent dans des sens opposés, ainsi que des poulies satellites (51) roulant sans glisser sur la poulie secondaire et la poulie supplémentaire et situées entre ces deux poulies, les poulies satellites (51) tournant chacune sur un porte-satellites (50) qui pivote lui-même autour de l'axe des poulies secondaire et supplémentaire.

**Patentansprüche**

1. Riemenscheibe mit variablem Durchmesser, die sich um eine Achse (2) dreht und mit beweglichen Elementen (4, 5, 13) versehen ist, um sich der Achse unter der Wirkung eines gemeinsamen Regelungsmechanismus (10, 7) zu nähern oder von ihr zu entfernen, wobei sich die Elemente alle in einer gemeinsamen Entfernung von der Achse ebenso wie von einer Führungsstruktur (3) für die beweglichen Elemente befinden, wobei der gemeinsame Regelungsmechanismus eine zur Riemenscheibe parallele Scheibe (10) ist, die bezüglich der Riemenscheibe drehbar ist und mit Pleueln (7) versehen ist, von denen jedes an einem Ende gelenkig mit einem beweglichen Element (4, 5, 13) verbunden ist und sich in einem Drehgelenk (9) auf der Scheibe dreht, wobei sich die Drehgelenke auf einem auf die Achse zentrierten Kreis befinden, dadurch gekennzeichnet, daß jedes Pleuel (7) ein Gegengewicht (42) an seinem anderen Ende trägt und daß sich das Drehgelenk (9) an einem Zwischenpunkt befindet.

2. Riemenscheibe nach Anspruch 1, dadurch gekennzeichnet, daß die beweglichen Elemente Abschnitte mit einer äußeren konvexen und in Kreisbogenform gekrümmten Oberfläche sind, auf die sich ein Kraftübertragungselement, wie etwa ein Treibriemen, stützen soll.

3. Riemenscheibe nach Anspruch 2, dadurch gekennzeichnet, daß die Abschnitte bis zu einer zurückgezogenen Position beweglich sind, wo sie aneinanderstoßen und wo ihre äußeren Oberflächen eine Drehzylinderfläche bilden.

4. Riemenscheibe nach einem der Ansprüche 1 bis 3, dadurch gekennzeichnet, daß die Führungsstruktur aus radialen Armen (5) besteht, auf denen die beweglichen Elemente gleiten.

5. Riemenscheibe nach einem der Ansprüche 1 bis 3, dadurch gekennzeichnet, daß die Führungsstruktur aus einer Riemenscheibe (110) besteht, die Riemenscheibendrehgelenke (109) trägt, auf denen Riemenscheibenpleuel (107) drehbar gelagert sind, wobei die Riemenscheibenpleuel außerdem jeweils mit einem beweglichen Element (4) drehbar verbunden sind, wobei sich die Riemenscheibendrehgelenke alle auf einem Kreis befinden, der auf die Achse zentriert ist und vom gleichen Durchmesser ist wie der Kreis, auf dem sich die Drehgelenke des Regelungsmechanismus befinden, wobei die beweglichen Elemente außerdem einen zur Achse gerichteten Abschnitt (113) tragen, der eine radiale Vertiefung (114) aufweist, wobei ein Zapfen (115) eines dritten (116) und eines vierten (117) Pleuels in der Vertiefung gleitet und die dritten und vierten Pleuel jeweils gelenkig an dem Pleuel des Regelungsmechanismus und dem Pleuel der Führungsstruktur befestigt sind.

6. Riemenscheibe nach Anspruch 5, dadurch gekennzeichnet, daß die dritten und vierten Pleuel einen gemeinsamen Zapfen besitzen, der in der Vertiefung gleitet und um den wenigstens eines von diesen drehbar gelagert ist, und daß die vier Pleuel eine Oberfläche in der Form eines Rhombus umgeben.

7. Doppelte Riemenscheibe nach einem der Ansprüche 1 bis 6, dadurch gekennzeichnet, daß die Gegengewichte bewegliche Elemente (42) einer zweiten Riemenscheibe sind, wobei sich die beiden Riemenscheiben in parallelen Ebenen befinden und sich um eine gemeinsame Achse (2) drehen, wobei die beweglichen Elemente der zweiten Riemenscheibe radial und in einem gemeinsamen Abstand von der Achse beweglich sind und von einem zweiten Führungsmechanismus geführt werden und auf ihrem Pleuel gelenkig gelagert sind, wobei die beiden beweglichen Elemente, die mit ein und demselben Pleuel verbunden sind, einen Winkel von 90° mit der Achse (2) bilden, wobei die beiden Führungsmechanismen miteinander verbunden sind.

8. Doppelte Riemenscheibe nach Anspruch 7, dadurch gekennzeichnet, daß die Pleuel und die damit drehbar verbundenen beweglichen Elemente eine Masseverteilung besitzen, die bei der Drehung der Riemenscheiben zentrifugale Trägheitskräfte bewirken, die ein resultierendes Drehmoment des Wertes Null um die Gelenke (9) besitzen.

9. Doppelte Riemenscheibe nach Anspruch 8, dadurch gekennzeichnet, daß die Pleuel symmetrisch sind und daß die zusammengehörenden beweglichen Elemente dieselbe Masse besitzen.

10. Drehmomentwandler mit einer doppelten Riemenscheibe, einer primären Riemenscheibe (P1) und eine sekundäre Riemenscheibe (P2), zwei Kraftübertragungselementen, wie etwa Treibriemen (111, 112), die zwischen der primären Riemenscheibe und einer der Riemenscheibe der doppelten Riemenscheibe auf der einen Seite und zwischen der anderen Riemenscheibe der doppelten Riemenscheibe und der sekundären Riemenscheibe auf der anderen Seite gespannt sind, ebenso wie mit einer Achslagerung (21-24) für die doppelte Riemenscheibe, die in Abhängigkeit von der radialen Verschiebung der Abschnitte der beiden Riemenscheiben (PV1 und PV2) der doppelten Riemenscheibe beweglich ist, gekennzeichnet durch eine doppelte Riemenscheibe nach einem der Ansprüche 7 bis 9.

11. Drehmomentwandler nach Anspruch 10, dadurch gekennzeichnet, daß die Lagerung Federn (23, 24) zur Sicherstellung der Spannung der Treibriemen umfaßt.

12. Drehmomentwandler nach einem der Ansprüche 10 oder 11, dadurch gekennzeichnet, daß die Lagerung (34) regelbar ist, um die Spannung der Treibriemen einzustellen.

13. Drehmomentwandler nach Anspruch 11, dadurch gekennzeichnet, daß die Lagerung ein Teleskoparm ist, der zwei Teile umfaßt, zwischen denen die Feder angeordnet ist.

14. Drehmomentwandler nach einem der Ansprüche 10 bis 13, dadurch gekennzeichnet, daß die Lagerung in Translationsrichtung im wesentlichen zwischen der primären Riemenscheibe und der sekundären Riemenscheibe beweglich ist.

15. Drehmomentwandler nach einem der Ansprüche 10 bis 13, dadurch gekennzeichnet, daß die Lagerung in Drehrichtung beweglich ist.

16. Drehmomentwandler nach einem der Ansprüche 10 bis 12, dadurch gekennzeichnet, daß die Lagerung zwei Teleskoparme (21, 22) umfaßt, die sich jeweils um die Achsen der primären und sekundären Riemenscheiben drehen.

17. Drehmomentwandler nach einem der Ansprüche 10 bis 16, dadurch gekennzeichnet, daß die Bewegung der Lagerung gesteuert und blockiert werden können.

18. Drehmomentwandler nach einem der Ansprüche 10 bis 16, dadurch gekennzeichnet, daß er eine zusätzliche Riemenscheibe (P3), die koaxial zur sekundären Riemenscheibe ist und über ein Kraftübertragungselement, wie etwa einen Treibriemen (113), derart mit der primären Riemenscheibe verbunden ist, daß sich die sekundäre Riemenscheibe und die zusätzliche Riemenscheibe gegenläufig drehen, ebenso wie satellitenscheiben (51) umfaßt, die ohne zu gleiten auf der sekundären und der zusätzlichen Riemenscheibe rollen und zwischen diesen beiden Riemenscheiben angeordnet sind, wobei sich die Satellitenscheiben (51) jeweils auf einem Satellitenträger (50) drehen, der sich selbst um die Achse der sekundären und zusätzlichen Riemenscheibe dreht.

## Claims

1. Variable diameter pulley rotating about a shaft (2) and provided with displaceable elements (4, 5, 13) for moving towards or away from the shaft under the action of a common regulating mechanism (10, 7), all the elements being at a common distance from the shaft, as well as a guidance structure (3) for the displaceable elements, the common regulating system being a disk (10) parallel to the pulley, which rotates relative to the pulley and which is provided with rods (7), whereof each is articulated at one end to a displaceable element (4, 5, 13), and pivots on a pivot (9) located on the disk, the pivots being located on a circle centred on the axis, characterized in that each rod (7) carries a counterweight (42) at its end and in that the pivot (9) is located at an intermediate point.

2. Pulley according to claim 1, characterized in that the displaceable elements are segments having an outer surface, on which bears a force transmission member, such as a belt (11) and which is convex and curved in a circular arc manner.

3. Pulley according to claim 2, characterized in that the segments are displaceable to a retracted position where they are contiguous and where their outer surfaces form a cylindrical surface of revolution.

4. Pulley according to any one of the claims 1 to 3, characterized in that the guidance structure is constituted by radial arms (5) on which slide the displaceable element.

5. Pulley according to any one of the claims 1 to 3, characterized in that the guidance structure is formed by a pulley disk (110) carrying pulley pivots (109), on which are articulated pulley rods (107), the latter being in each case articulated to a displaceable element 94), the pulley pivots all being located on a circle centred on the axis and of the same diameter as the circle on which the pivots of the regulating mechanism are located, the displaceable elements also carrying a portion (113) directed towards the axis and carrying a radial groove (114), a lug (115) of a third (116) and a fourth (117) rods sliding in the grooves and the third and fourth rods being articulated respectively on the rod of the regulating mechanism and the rod of the guidance structure.

6. Pulley according to claim 5, characterized in that the third and fourth rods have a common lug sliding in the groove and about which at least one of then is articulated and in that the four rods surround a lozenge-shaped surface.

7. Double pulley according to any one of the claims 1 to 6, characterized in that the counterweights are displaceable elements (42) of a seccnd pulley, the two pulleys being in parallel planes and rotating about a common shaft (2), the displaceable elements of the second pulley being radially displaceable and at a distance from the shaft, guided by a second guidance mechanism and articulated on their rod, the two displaceable elements associated by the same rod forming an angle of 90° with shaft (2), the two guidance mechanisms being integral.

8. Double pulley according to claim 7, characterized in that the rods and the displaceable elements articulated thereto have a mass distribution which, during the rotation of the pulleys produces centrifugal forces of inertia having a zero resultant rotation moment about pivot (9).

9. Double pulley according to claim 8, characterized in that the rods are symmetrical and in that the associated displaceable elements have the same mass.

10. Speed variator comprising a double pulley, a primary pulley ($P_1$) and a secondary pulley ($P_2$),

two force transmission elements such as belts (111, 112) taut between the primary pulley and one of the pulleys of the double pulley on one hand, between the other pulley of the double pulley and the secondary pulley on the other, as well as a support (21-24) for the shaft of the double pulley displaceable as a function of the radial displacements of the segments of the two pulleys ($PV_1$, $PV_2$) of the double pulley, characterized by a double pulley according to any one of the claims 7 to 9.

11. Speed variator according to claim 10, characterized in that the support comprises springs (23, 24) for ensuring the tension of the belts.

12. Speed variator according to either of the claims 10 or 11, characterized in that the support (34) is regulatable for adjusting the tension of the belts.

13. Speed variator according to claim 11, characterized in that the support is a telescopic arm having two parts between which is installed the spring.

14. Speed variator according to any one of the claims 10 to 13, characterized in that the support is displaceable by translation substantially between the primary pulley and the secondary pulley.

15. Speed variator according to any one of the claims 10 to 13, characterized in that the support is displaceable by rotation.

16. Speed variator according to any one of the claims 10 to 12, characterized in that the support comprises two telescopic arms (21, 22) respectively pivoting about the axes of the primary and secondary pulleys.

17. Speed variator according to any one of the claims 10 to 16, characterized in that the displacements of the support can be controlled and blocked.

18. Speed variator according to any one of the claims 10 to 16, characterized in that it comprises a supplementary pulley (P ) coaxial to the secondary pulley and connected by a force transmission element, such as a belt (113) to the primary pulley, in such a way that the secondary pulley and the supplementary pulley turn in opposite directions, whilst satellite pulleys (51) run without slipping on the secondary pulley and the supplementary pulley and, between said two pulleys, the satellite pulleys (51) in each case rotate on a satellite carrier (50), which pivots about the axis of the secondary and supplementary pulleys.

FIG. 1

# FIG. 2 a

# FIG. 2 b

EP 0 345 139 B1

FIG. 3

FIG. 4

FIG. 5

FIG. 6

# FIG. 7

# FIG. 8